# EUROPEAN PATENT SPECIFICATION

(11) **EP 1 792 816 B1**
(45) Date of publication and mention of the grant of the patent: **28.10.2009**
(21) Application number: 05026055.3
(22) Date of filing: 30.11.2005
(51) Int. Cl.: B62K 15/00, B62K 3/10

(54) **Two wheel vehicle structure**
Struktur für ein Zweiradfahrzeug
Structure pour un véhicule à deux roues

(43) Date of publication of application: 06.06.2007
(73) Proprietor: Gianetti, Paolo, 10025 Pino Torinese TO (IT)
(72) Inventor: Dettori, Andrea, 55100 S.Maria a Colle (LU) (IT); Angerilli, Michael, 55029 Ponte e Moriano (LU) (IT)
(74) Representative: Celestino, Marco

(56) References cited:
- EP-A- 0 983 933
- WO-A-97/10141
- CH-A- 560 625
- DE-A1- 10 032 105
- US-A- 4 429 891
- US-A- 5 590 895

## Description

### Field of the invention

The present invention generally relates to a frame for two wheel vehicles, in particular for bicycles.

### Description of the prior art

As well known, a bicycle of traditional type provides a structure of tubular elements comprising normally a central column, or saddle tube, in which a saddle for a user is telescopically housed. The central column is connected, by a stiff frame consisting of one or several tubular bars, to a short tube forming a steering column, where a handlebar is housed that allows the user to steer the vehicle. The short tube of the steering column is then connected to a fork supporting the hub of the front wheel, whereas a rear fork is connected directly to the central column and supports the hub of the rear wheel.

During the years the bicycle frame design above described has been variously improved, as well as the materials for its construction.

For example, in US 6955372 a frame for bicycles has been described having a particularly aerodynamic design with a substantially horizontal "V" shape. More in detail, at the vertex of the V, a short tube for the handlebar is arranged connected to a front fork, whereas, at the ends of the V, the saddle and the rear wheel of the bicycle are respectively connected. This prior art frame proposes an unusual distribution of the forces with respect to the previous solutions for optimizing the weight/strength ratio of the structure.

However, the above described frame is designed for racing bikes and is a monobloc that is not much easy to make and, in particular, not designed for common bicycles. For example, it is not suitable for bicycles of foldable type, i.e. having a frame that allows to be turned into a collapsed configuration to assist the transport, or the storage when not used. The foldable bicycles of prior art provide the presence of one or more hinges at the stiff parts, i.e. the frame, the forks and the handlebar, to convert the vehicle into a configuration of minimum encumbrance.

In particular, the hinges are associated to stops that block, or allow, the rotation of the two stiff parts that connect them and then allow to turn from a collapsed to an extended configuration, or vice-versa. The rotation of the stiff parts about the relative hinges causes the same to partially overlap allowing a reduction of the encumbrance.

The foldable bicycles of prior art have, however, drawbacks of different nature. Firstly, for allowing the bicycle to turn into a collapsed configuration having minimum encumbrance, it is necessary to reduce the sections and the thicknesses of the stiff parts of the frame. In particular, the size of the most stressed parts of the frame are reduced, such as the forks and the handlebar. This can cause a considerable weakening of such parts with subsequent decrease of the steadiness and then of the safety of the vehicle. Furthermore, the operations necessary for turning the foldable bicycles of prior art from an extended configuration to a collapsed configuration, or vice-versa, are particularly complex and require a high force mainly for the structurally complicated folding systems.

In addition, the collapsed configuration has still a high encumbrance.

In WO9710141 a bicycle is described having a cantilever beam hinged to the front portion of the frame and a saddle mounted on the cantilever beam, which can rotate completely with respect to the front portion of the frame, by a hinge. The weight on the saddle forms a long moment arm with respect to the hinge, which is subject to high loads. Document WO 9 710 141 discloses a two wheel vehicle structure according to the preamble of claim 1.

### Summary of the invention

It is then a feature of the present invention to provide a structure of a two wheel vehicle, in particular a bicycle, which presents a high resistance against dynamic loads, to which the frame is subject during the use, and has a particularly aerodynamic profile as well as it is suitable for a common use.

It is a particular feature of the present invention to provide such a two wheel vehicle structure that when not used is bent into a configuration of minimum encumbrance.

It is also a feature of the present invention to provide a two wheel vehicle structure of foldable type for speeding up and making easier the operations of passage from a collapsed configuration to an extended configuration and vice-versa.

It is another feature of the present invention to provide a two wheel vehicle structure of foldable type that presents a stiffness and a reliability higher than foldable bicycles of prior art.

In accordance with the present invention there is provided a two wheel vehicle structure as set out in claim 1.

These and other objects are accomplished by a two wheel vehicle structure, in particular a bicycle, according to the invention, comprising:
- a frame having:
   - a front portion suitable for receiving a front wheel and a handlebar;
   - a rear portion suitable for receiving a rear wheel;
- a support for a saddle.

The rear portion and the front portion of the frame are pivotally connected to each other, whereby it is possible to move them from an extended configuration, where the portions are aligned, to a collapsed configuration, where the portions are substantially overlapped.

According to the invention, each of the two parallel rods of the cantilever beam comprises a fixed part, integral to the front portion of the frame, and a movable part, which comprises the support for the saddle, the movable part of the two rods being operatively connected to the fixed part through means for adjusting the longitudinal encumbrance of the cantilever beam.

This way, it is possible to displace the cantilever beam from an extended configuration to a collapsed configuration and vice-versa, in addition to the possibility of folding the frame.

Preferably, the distance between the point of connection of the cantilever beam at the front portion of the frame and the axis of the handlebar is set between 5 and 35 cm, in particular between 10 and 20 cm.

In particular, the means for adjusting the longitudinal encumbrance of the cantilever beam can be housed within the channel defined between the two bars. This way, the means for adjusting the longitudinal encumbrance of the cantilever beam take a position that does not disturb the user and is of maximum safety. Furthermore, they are concealed leaving the aesthetics of the vehicle unaffected.

Each rod has the end hinged to the fixed part and to the movable part of the cantilever beam, whereby they form a four-bar linkage. Therefore, the couples of elements consisting of the fixed part and the movable part of the cantilever beam and of the first and the second rod remain parallel. In particular, in the extended position of the two-wheel vehicle the movable part of the cantilever beam has means cooperating with the fixed part of the cantilever beam for transmitting stably the load on the saddle.

Advantageously, furthermore, means are provided for bending the handlebar for causing it to rotate about 180° between the extended configuration and the collapsed configuration.

### Brief description of the drawings

The invention will be made clearer with the following description of some exemplary embodiments, exemplifying but not limitative, with reference to the attached drawings wherein:
- Figure 1 shows a perspective elevational side view of a structure of bicycle according to the prior art;
- Figure 2 shows a perspective top view of the structure of bicycle of figure 1;
- Figures 3 and 4 show a perspective elevational side view of an exemplary embodiment of the bicycle according to the invention, where respectively an extended configuration and a collapsed configuration are shown;
- Figures from 5 to 7 show diagrammatically a side view of a possible succession of steps through which the bicycle of figure 3 turns from the extended configuration to the collapsed configuration.

### Description of preferred exemplary embodiments.

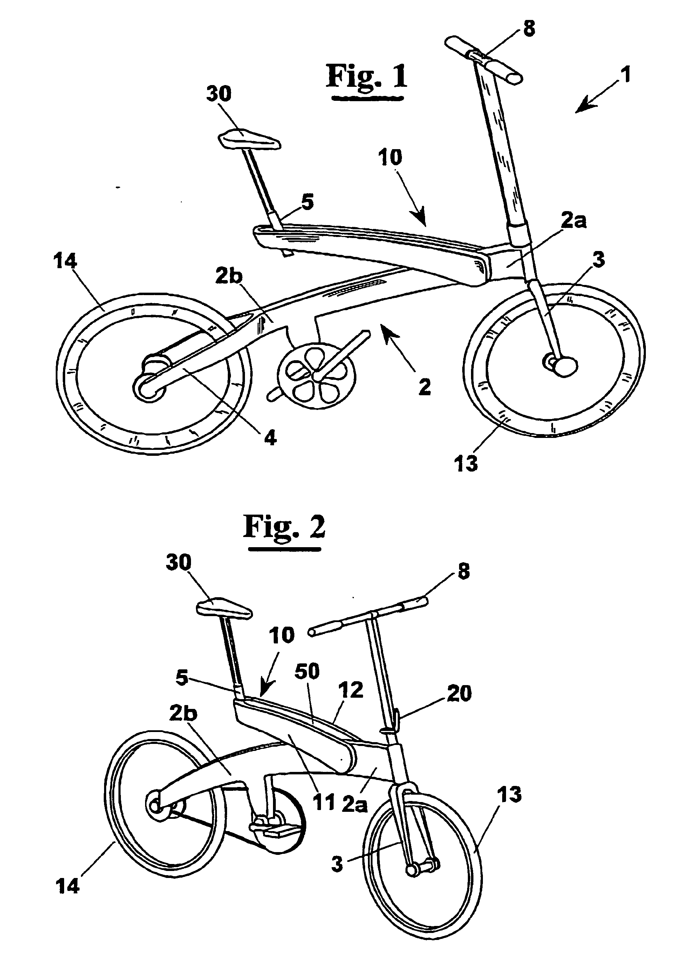

With reference to figure 1, a two wheel vehicle structure, in particular a bicycle 1 provides a shaped frame 2 having a front portion 2a and a rear portion 2b. Front portion 2a has a front fork 3, connected to the hub of the front wheel 13, and a handlebar 8. Rear portion 2b has an end 4 suitable for engaging with the hub of the rear wheel 14.

The bicycle 1 comprises, furthermore, a cantilever beam 10 connected to front portion 2a near the handlebar 8 and arranged at the other end of a support 5 for a saddle 30. More in detail, cantilever beam 10 provides two parallel rods 11 and 12 connected at an end to frame 2 at opposite sides thereof and linked to each other at the other end. The two rods 11 and 12 define, in particular, a channel 50 (figure 2).

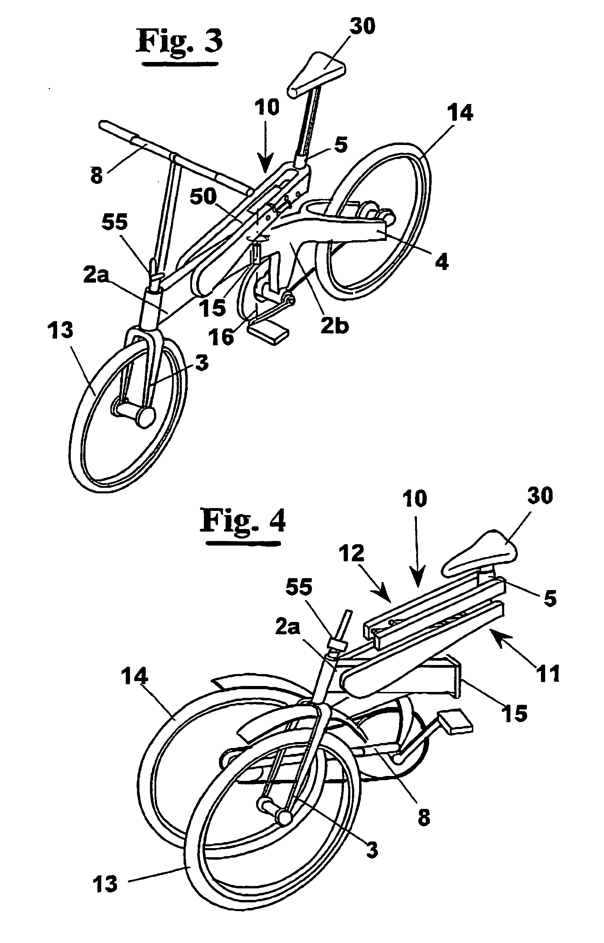

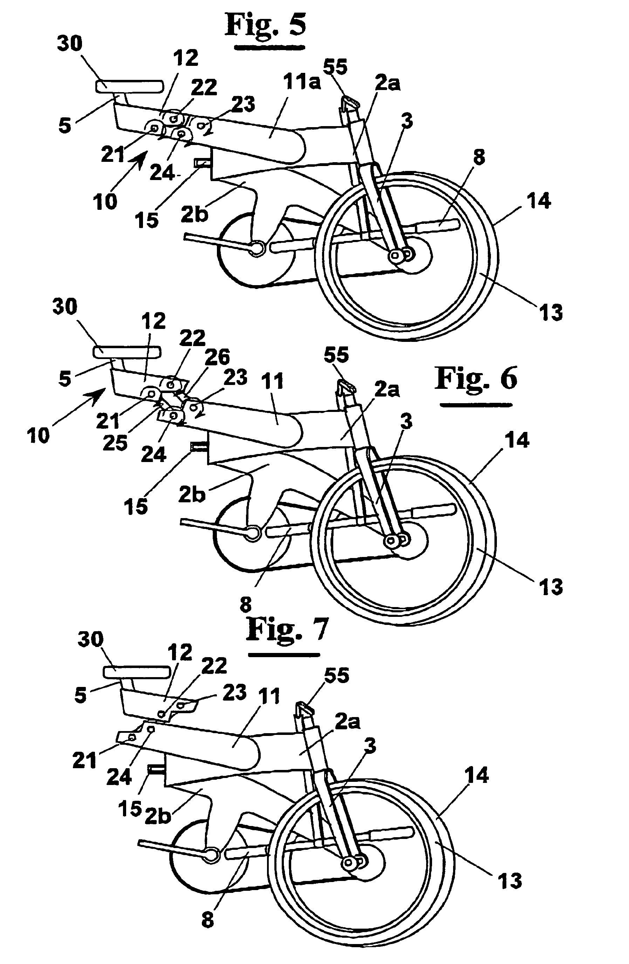

Frame 2, shown in figures 1 and 2, and above described, can be, in particular, used for a bicycle according to the invention of foldable type, as shown in figures from 3 to 7. In this case, frame 2 has a hinge 15 that allows the rotation of front portion 2a with respect to rear portion 2b about vertical axis 16. This allows bringing the bicycle 1 from an extended configuration, where front portion 2a and rear portion 2b are aligned, (figure 3) to a collapsed configuration, where the two portions are substantially overlapped (figure 4).

In addition to the rotation of the frame about vertical axis 16, each rod 11 and 12 of cantilever beam 10 is provided made of two parts, a fixed part 11a, or 12a, connected to the frame 2, and a movable part 11b, or 12b, provided with the support 5 for saddle 30. The fixed parts 11a and 12a and the movable parts 11b and 12b are connected by means of rods 25 and 26 (figures from 5 to 7) hinged to them at points 21-24. In other words, rods 25 and 26 form with rods 11 and 12 a four-bar linkage for actuating movable parts 11b, or 12b, with respect to fixed parts 11a and 12a, in order to reducing further the longitudinal encumbrance of cantilever beam 10 and for assisting the passage of bicycle 1 from the extended configuration of figure 3 to the collapsed configuration of figure 4.

Rods 25 and 26 can be advantageously housed within channel 50 set between rod 11 and rod 12, in order to remain hidden within a position that does not disturb the user and that does not affect the aesthetic and the design of bicycle 1. As diagrammatically shown in figures from 5 to 7, furthermore, fixed parts 11a and 12a and movable parts 11b and 12b may have, at their approaching ends, a stepped profile that is a coupling reference for the two parts and allows a steady transmission to the frame in the extended configuration of the weight acting on the saddle.

Handlebar 8 is, furthermore, connected to frame 2 by a hinge 55 that allows to it a rotation of about 180° in order to bring it to a position of minimum encumbrance at the collapsed configuration.

The foregoing description of a specific embodiment will so fully reveal the invention according to the conceptual point of view, so that others, by applying current knowledge, will be able to modify and/or adapt for various applications such an embodiment without further research and without parting from the scope of the invention as defined in the claims, and it is therefore to be understood that such adaptations and modifications will have to be considered as equivalent to the specific embodiment. The means and the materials to realise the different functions described herein could have a different nature without, for this reason, departing from the field of the invention as defined in the claims. It is to be understood that the phraseology or terminology employed herein is for the purpose of description and not of limitation.

## Claims

1. Two wheel vehicle structure comprising:
- a frame (2) having:
- a front portion (2a) suitable for receiving a front wheel and a handlebar;
- a rear portion (2b) suitable for receiving a rear wheel;
- a support for a saddle;
wherein said support for said saddle is operatively connected to said front portion (2a) of said frame (2) by a cantilever beam (10) having an end connected near said handlebar, and wherein
said rear portion (2b) and said front portion (2a) of said frame (2) are pivotally connected to each other, whereby it is possible to move them from an extended configuration, where said portions are aligned, to a collapsed configuration, where said portions are
substantially overlapped, **characterised in that** said cantilever beam (10) comprises a first and a second substantially parallel rod (11, 12) rigidly connected to said frame (2) at opposite sides thereof, said rods (11, 12) defining a channel (50) between them and each of said two parallel rods (11, 12) of said cantilever beam (10) comprises a fixed part (11a, 12a), integral to said front portion (2a) of said frame (2), and a movable part (11b, 12b), which comprises the support for the saddle, said movable parts (11b, 12b) of said two rods (11, 12) being operatively connected to said fixed parts (11a, 12a) through means for adjusting the longitudinal encumbrance of said cantilever beam (10).

2. Two wheel vehicle structure, according to claim 1, wherein said means for adjusting the longitudinal encumbrance of said cantilever beam (10) are housed within said channel (50).

3. Two wheel vehicle structure, according to claim 2, wherein said means for adjusting the longitudinal encumbrance of said cantilever beam (10) provide a first and a second substantially parallel rod (25, 26), said first and said second substantially parallel rods (25, 26) being hinged to said fixed parts (11a, 12a) and to said movable parts (11b, 12b) of said cantilever beam (10).

4. Two wheel vehicle structure, according to claim 3 wherein said first and said second substantially parallel rods (25, 26) form a four-bar linkage for actuating said movable parts (11b,12b), with respect to said fixed parts (11a, 12a).

## Patentansprüche

1. Struktur für ein Zweiradfahrzeug, mit:
- einem Rahmen (2) mit:
- einem Vorderabschnitt (2a), der zur Aufnahme eines Vorderrads und einer Lenkstange geeignet ist,
- einem Hinterabschnitt (2b), der zur Aufnahme eines Hinterrades geeignet ist,
- einer Halterung für einen Sattel,
wobei die Halterung für den Sattel durch einen Auslegerträger (10), der mit einem Ende nahe der der Lenkstange verbunden ist, funktionsmäßig mit dem Vorderabschnitt (2a) des Rahmens (2), und wobei
der hintere Abschnitt (2b) und der vordere Abschnitt (2a) des Rahmens (2) gelenkig miteinander verbunden sind, wodurch es möglich ist, sie aus einer ausgestreckten Konfiguration, in der die Abschnitte miteinander fluchten, in eine zusammengelegte Konfiguration, in der die Abschnitte einander im wesentlichen überlappen bzw. überlagern, zu bewegen, **dadurch gekennzeichnet, daß** der Auslegerträger (10) eine erste und eine zweite, im wesentlichen zueinander parallele Strebe (11,12) umfaßt, die starr mit dem Rahmen (2) an gegenüberliegenden Seiten derselben verbunden sind, die Streben (11,12) zwischen sich einen Kanal (50) definieren und jede der zwei parallelen Streben (11,12) des Auslegerträgers (10) einen feststehenden Teil (11a,12a), der integral mit dem Vorderabschnitt (2a) des Rahmens (2) ist, und einen beweglichen Teil (11b,12b), der die Halterung für den Sattel aufweist, besitzt,, wobei die beweglichen Teile (11b,12b) der zwei Streben (11,12) funktionsmäßig mit den feststehenden Teilen (11a,12a) durch Mittel zum Einstellen der Longitudinalerstreckung ("encumbrance") des Auslegerträgers (10) verbunden sind.

2. Struktur für ein Zweiradfahrzeug gemäß Anspruch 1, wobei die Mittel zum Einstellen der Longitudinalerstreckung des Auslegerträgers (10) in dem Kanal (50) aufgenommen sind.

3. Struktur für ein Zweiradfahrzeug gemäß Anspruch 2, wobei die Mittel zum Einstellen der Longitudinalerstreckung des Auslegerträgers (10) eine erste und eine zweite im wesentlichen zueinander parallele Strebe (25,26) vorsehen, wobei die ersten und die zweiten im wesentlichen parallelen Streben (25,26) an den feststehenden Teilen (11a,12a) und den beweglichen Teilen (11b,12b) des Auslegerträgers (10) angelenkt sind.

4. Die Struktur für ein Zweiradfahrzeug gemäß Anspruch 3, wobei die ersten und zweiten im wesentlichen parallelen Streben (25,26) eine Vier-Stangen-Koppelung zum Betätigen der beweglichen Teile (11b,12b) bezüglich den feststehenden Teilen (11a,12a) bilden.

## Revendications

1. Structure de véhicule à deux roues, comprenant :
un châssis (2) ayant :
une partie avant (2a) appropriée pour recevoir une roue avant et un guidon ;
une partie arrière (2b) appropriée pour recevoir une roue arrière ;
un support pour une selle ;
dans laquelle ledit support pour ladite selle est raccordé de manière opérationnelle à ladite partie avant (2a) dudit châssis (2) par une poutre en porte à faux (10) ayant une extrémité raccordée à proximité dudit guidon, et dans laquelle :
ladite partie arrière (2b) et ladite partie avant (2a) dudit châssis (2) sont raccordées de manière pivotante entre elles, moyennant quoi il est possible de les faire passer d'une configuration étendue, dans laquelle lesdites parties sont alignées, à une configuration repliée, dans laquelle lesdites parties se chevauchent sensiblement, **caractérisée en ce que** ladite poutre en porte à faux (10) comprend une première et une seconde tige (11, 12) sensiblement parallèles, rigidement raccordées audit châssis (2) au niveau de leurs côtés opposés, lesdites tiges (11, 12) définissant un canal (50) entre elles, et chacune desdites deux tiges (11, 12) parallèles de ladite poutre en porte à faux (10) comprend une partie fixe (11a, 12a) solidaire de ladite partie avant (2a) dudit châssis (2) et une partie mobile (11b, 12b) qui comprend le support pour la selle, lesdites parties mobiles (11b, 12b) desdites deux tiges (11, 12) étant raccordées de manière opérationnelle auxdites parties fixes (11a, 12a) par le biais de moyens pour ajuster l'encombrement de ladite poutre en porte à faux (10).

2. Structure de véhicule à deux roues selon la revendication 1, dans laquelle lesdits moyens pour ajuster l'encombrement longitudinal de ladite poutre en porte à faux (10) sont logés à l'intérieur dudit canal (50).

3. Structure de véhicule à deux roues selon la revendication 2, dans laquelle lesdits moyens pour ajuster l'encombrement longitudinal de ladite poutre en porte à faux (10) proposent une première et une seconde tige (25, 26) sensiblement parallèles, ladite première et ladite seconde tige (25, 26) sensiblement parallèles étant articulées par rapport auxdites parties fixes (11a, 12a) et auxdites parties mobiles (11b, 12b) de ladite poutre en porte à faux (10).

4. Structure de véhicule à deux roues selon la revendication 3, dans laquelle ladite première et ladite seconde tige (25, 26) sensiblement parallèles forment une tringlerie à quatre barres pour actionner lesdites parties mobiles (11b, 12b) par rapport auxdites parties fixes (11a, 12a).
